# EUROPÄISCHE PATENTSCHRIFT

(11) **EP 2 835 878 B1**
(45) Veröffentlichungstag und Bekanntmachung des Hinweises auf die Patenterteilung: **10.04.2019**
(21) Anmeldenummer: 13401085.9
(22) Anmeldetag: 05.08.2013
(51) Int. Cl.: H01R 13/74

(54) **Gehäusewandverschraubung für einen elektrischen Steckverbinder**
Housing wall screw connection for an electrical connector
Vissage mural de boîtier pour un connecteur à fiche électrique

(43) Veröffentlichungstag der Anmeldung: 11.02.2015
(73) Patentinhaber: PHOENIX CONTACT Connector Technology GmbH, 71083 Herrenberg (DE)
(72) Erfinder:
(74) Vertreter: Klocke, Peter

(56) Entgegenhaltungen:
- DE-B3-102006 036 097
- DE-U1- 20 315 666
- DE-U1-202007 003 258

## Beschreibung

Die Erfindung betrifft eine abdichtende Wanddurchführung für eine Wandung eines elektrischen Gerätes mit einer flanschförmigen Einbauhülse zur Aufnahme eines elektrische Kontakte aufweisenden Steckerteils, mit dem ein Gegensteckerteil steckverbindbar ist, das eine mit der Einbauhülse verschraubbare Sicherungsschraubhülse als Abzugssicherung für den Gegenstecker aufweist, wobei die Einbauhülse zur Aufnahme eines Steckabschnittes des Steckerteils ausgebildet ist und ein mit der Einbauhülse verbundenes außen umlaufend abstehendes Widerlager mit einer ringförmigen Dichtung für die Wandung aufweist, das den vollständigen Durchtritt der Einbauhülse durch einen Wanddurchbruch der Wandung verhindert, und mit einem die Einbauhülse zumindest teilweise außen umgreifenden Spannelement, mittels dem die Einbauhülse in Richtung des Widerlagers an der Wandung Kraft beaufschlagbar ist, so dass das Widerlager an der Wandung in Anlage haltbar ist, und wobei das Spannelement eine rohrförmige Spannhülse ist, die mindestens ein innen vorstehendes Rastmittel aufweist, das mit einem außen an der Einbauhülse ausgebildeten Gegenrastmittel zusammenwirkt.

Elektrische und elektronische Geräte haben oftmals aus einer Gehäusewand herausgeführte Steckverbinder, mit denen der Anschluss elektrischer Leitungen an das Gerät erleichtert wird. Bekannte Durchführungen dieser Art sind üblicherweise so ausgebildet, dass sie im montierten Zustand fest mit der Wandung verbunden sind und einen Wanddurchbruch der Wandung durchdringen. Sie sind hierzu häufig als ringförmige Einbauhülse mit einem umlaufenden Ringbund ausgebildet, die unter Zwischenlage einer Dichtung mit der Wandung verschraubt wird. Die Einbauhülse ist zur Aufnahme eines elektrische Kontakte aufweisenden Steckerteils, beispielsweise eines Isolierkörpers mit stift- und/oder buchsenförmigen Steckkontakten vorgesehen. Dabei kann das Steckerteil zum Beispiel über Anschlussleitungen mit einer elektrischen Schaltungsleiterplatte verbunden oder direkt mit der Leiterplatte verlötet sein. Schaltungsleiterplatten mit ein- bzw. aufgelöteten Steckerteilen werden in der Regel direkt an der Gehäusewand befestigt oder derart nahe der Gehäusewand fixiert angeordnet, dass das Steckerteil mit einem Steckabschnitt in die Einbauhülse hinein ragt. Der Ringbund der Einbauhülse, der als Widerlager dient, kann dabei an der dem Innenraum des Gerätes zugeordneten Innenseite der Wandung oder an der dem Innenraum abgewandten Außenseite der Wandung angeordnet sein. Üblicherweise wird die Einbauhülse von bekannten Wanddurchführungen fest mit der Wandung verschraubt, bevor die Schaltungsleiterplatte in dem Gehäuse montiert wird.

Herstellungsbedingt ist die Lage der Befestigungseinrichtungen für die Leiterplatte und des Wanddurchbruches für die Einbauhülse des Gehäuses sowie die Position des Steckerteils auf der Leiterplatte mit gewissen Toleranzen behaftet, die dazu führen können, dass das Steckerteil einen mehr oder weniger großen Versatz zu der Mittelachse der Einbauhülse aufweist. Wenn die Position des Steckerteils nicht wie konstruktiv vorgesehen eingehalten wird, können Schwierigkeiten auftreten, wenn die Schaltungsleiterplatte unter Eingriff des Steckabschnittes in die Einbauhülse montiert wird. Abhängig von der Größe des Versatzes kann dann das Steckerteil überhaupt nicht oder nur exzentrisch in die Einbauhülse eingeführt werden, so dass eine radiale Neuausrichtung der Einbauhülse erforderlich ist, um eine konzentrische Anordnung des Steckabschnittes in der Einbauhülse zu erreichen. Dieses Problem tritt verstärkt auf, wenn die Leiterplatte mehrere mit Abstand zueinander angeordnete Steckerteile aufweist, denen jeweils eine eigene Einbauhülse an der Wandung des Gerätes zugeordnet ist.

Zum allgemeinen Stand der Technik wird auf die Druckschrift DE 203 15 666 U1 verwiesen. Diese offenbart eine Steckvorrichtung für Steckverbinder, insbesondere für eine als Wanddurchführung ausgebildete Steckvorrichtung, zur Montage in tafelförmigen Materialien, mit einem Isolierkörper in dem Kontaktelemente angeordnet sind, wobei die Steckverbinder beidseitig des Isolierkörpers steckbar sind. Die bekannte Steckvorrichtung weist eine Befestigungshülse, in der der Isolierkörper angeordnet ist, mit einem außen in etwa zentral an der Befestigungshülse angeordneten hinterschnittenen umlaufenden Ringbund auf, über den ein Rastelement mit einem angeformten axial mehrfach unterbrochenen Rastring, der nach innen vorstehende Rastnasen besitzt, an der Befestigungshülse unverrückbar festlegbar ist. Zur Abdichtung und zum Toleranzausgleich ist ein Dichtring vorgesehen, der zwischen einem stirnseitig angeordneten Außenring der Befestigungshülse und der Montagewand angeordnet ist und beim Verrasten des Rastelementes mit der Befestigungshülse gequetscht wird.

Ausgehend von dem vorstehend beschriebenen Stand der Technik liegt der Erfindung die Aufgabe zugrunde, eine Möglichkeit vorzuschlagen, die bei Maßabweichungen ein problemloses und positionsgenaues Einführen des mit der Schaltungsleiterplatte verlöteten Steckerteils in die an der Wandung vormontierte Einbauhülse gestattet.

Diese Aufgabe wird erfindungsgemäß durch eine abdichtende Wanddurchführung für eine Wandung eines elektrischen Gerätes mit den Merkmalen des Anspruchs 1 gelöst. Weitere vorteilhafte Ausführungsformen sind den rückbezogenen Ansprüchen zu entnehmen.

Kerngedanke der Erfindung ist es, eine Wanddurchführung zu schaffen, bei der der Außendurchmesser der Einbauhülse gezielt etwas kleiner gewählt ist als der Durchmesser des Wanddurchbruches, um die Wanddurchführung abdichtend radial verschiebbar an der Wandung vorgespannt zu montieren und erst nach Einführen des Steckerteils fest zu spannen und damit unverrückbar zu fixieren. Das um die Einbauhülse laufende, vorzugsweise ringförmige Widerlager ist der Innenseite der Wandung und das die Einbauhülse umgreifende Spannelement der Außenseite der Wandung zugeordnet.

Das Spannelement der erfindungsgemäßen abdichtenden Wanddurchführung ist, wie aus dem Stand der Technik bekannt, als rohrförmige Spannhülse ausgebildet, die mindestens ein innen vorstehendes Rastmittel aufweist, das mit mindestens einem außen an der Einbauhülse ausgebildeten Gegenrastmittel zusammenwirkt. Die Rastmittel und die Gegenrastmittel sind derart ausgebildet und angeordnet, dass sie die Einbauhülse abdichtend an der Wandung des Gehäuses radial verschiebbar vorfixieren. Dabei ist die ringförmige Dichtung an der Innenseite der Wandung in Anlage gehalten und wird mit einem bestimmten Anpressdruck über das Widerlager gegen die Wandung gepresst, der derart gewählt ist, dass ein seitliches Verschieben der Einbauhülse zum Ausrichten der Einbauhülse gegenüber dem aufzunehmenden Steckabschnitt des Steckerteils mit geringem Kraftaufwand, wenn notwendig, möglich ist. Es ist selbstverständlich, dass das Widerlager und die Dichtung im Durchmesser deutlich größer gewählt sind als der Durchmesser des Wanddurchbruches. Nach dem Einführen des Steckabschnittes in die Einbauhülse kann die Einbauhülse unverrückbar über geeignete Fixiermittel, die an die Einbauhülse und/oder die Spannhülse angeformt oder die nicht Teil der Wanddurchführung sind, an der Wandung des Gehäuses festgelegt werden. Nicht zu der Wanddurchführung gehörende Fixiermittel können beispielsweise an der Wandung des Gerätes oder an dem Gegensteckerteil ausgebildet sein. An dem Gegensteckerteil vorgesehene Fixiermittel sind natürlich nur bei einem mit der Wanddurchführung abzugssicher verbundenen Gegensteckerteil wirksam. Die Fixiermittel können sich dabei unmittelbar an der Wandung oder über die Spannhülse an der Wandung direkt oder indirekt abstützen und so die Einbauhülse in Richtung der Wandung kraftbeaufschlagen, so dass die Einbauhülse relativ zu der Wandung bewegbar ist, bis das Widerlager fest an die Wandung angepresst ist. Die Spannhülse kann aus Metall oder Kunststoff geformt sein und ist vorzugsweise in radialer Richtung zumindest abschnittsweise federnd ausgebildet.

Erfindungsgemäß weist die Einbauhülse ein Innengewinde für ein Außengewinde der Sicherungsschraubhülse des Gegensteckerteils auf, wobei die Einbauhülse mit sich in axialer Richtung erstreckenden Hülsensegmenten ausgebildet ist, zwischen denen sich Segmentzwischenräume erstrecken, und wobei an der Spannhülse innen sich radial verlaufende Querstege angeordnet sind, die sich durch die Segmentzwischenräume hindurch erstrecken und innen über die Einbauhülse vorstehen. Damit ist die Spannhülse durch Verschrauben der Sicherungsschraubhülse mit der Einbauhülse in Richtung des Widerlagers bewegbar ist, wobei die Sicherungsschraubhülse auf die Querstege der Spannhülse drückt. Die erfindungsgemäße abdichtende Wanddurchführung ist zur Aufnahme eines auf einer Schaltungsleiterplatte angeordneten und mit dieser verlöteten Steckerteils vorgesehen.

Die Einbauhülse weist ein Innengewinde für ein Außengewinde der Sicherungsschraubhülse auf. Dies bedingt, dass zwischen dem Steckabschnitt des Steckerteils und der Innenwand ein freier Ringraum vorgesehen ist, in den ein Schraubabschnitt der Sicherungsschraubhülse einführbar ist, der das Außengewinde trägt. Die Sicherungsschraubhülse bildet somit eine Abzugssicherung für den Gegenstecker. Beim Verschrauben der Sicherungsschraubhülse des Gegensteckerteils mit der Einbauhülse kann sich der Schraubabschnitt der Sicherungsschraubhülse stirnseitig auf den Querstegen der Spannhülse abstützen und so die Spannhülse in Richtung des Widerlagers der Einbauhülse bewegen. Auf diese Weise wirkt der Schraubabschnitt der Sicherungsschraubhülse als Fixiermittel, der das Widerlager fest an die Wandung anpresst. Die Spannhülse kann somit in Richtung des Widerlagers, d. h. gegen die Außenseite der Wandung verschoben werden, so dass sie sich über den Federspannring und/oder direkt an der Wandung außen abstützt. Beim Verschrauben der Sicherungsschraubhülse mit der Einbauhülse wird der Federspannring in jedem Fall weiter gespannt. Durch axiales Verschieben der Spannhülse wird zudem der Anpressdruck der Dichtung an die Innenseite der Wandung deutlich verstärkt und damit zum einen die Dichtwirkung der Dichtung erhöht und zum anderen die Einbauhülse seitlich unverrückbar gegenüber dem Wanddurchbruch der Wandung fixiert. Abhängig von der Ausführungsform der Einbauhülse und der Spannhülse kann der erhöhte Anpressdruck auch beibehalten werden, wenn der Gegenstecker von der Wanddurchführung gelöst wird.

Bei einer Ausführungsform der erfindungsgemäßen abdichtenden Wanddurchführung weist die Spannhülse innen eine an die Querstege angeformte zylindrische Führungshülse für den Steckabschnitt des Steckerteils auf, die von den Querstegen gehalten ist und einen Ringraum zwischen der Spannhülse und der Führungshülse begrenzt. Die Führungshülse ist vorzugsweise außen in Anlage an dem Steckabschnitt des Steckerteils und stützt diesen seitlich ab. Sie stabilisiert damit das Steckerteil, so dass der Steckabschnitt in der Ausrichtung gegenüber der Einbauhülse lagestabil angeordnet ist.

Erfindungsgemäß ist bei einer begünstigten Ausführungsform der Erfindung zwischen dem Widerlager und der Spannhülse der Wanddurchführung ein Federspannring angeordnet, der die elastische Dichtung mit einem vordefinierten geringen Anpressdruck bei mit der Einbauhülse verrasteter Spannhülse an die Wandung derart dichtend anpresst, dass die Einbauhülse bei Bedarf nach der Vormontage noch radial verrückbar ist.

Bei einer bevorzugten Ausführungsform der erfindungsgemäßen Wanddurchführung ist eine erste Rastvorstellung vorgesehen, bei der die Spannhülse die Einbauhülse derart an der Wandung vorspannt, dass die elastische Dichtung wirksam und die Einbauhülse in radialer Richtung verrückbar ist, sofern der in der Wandung vorgesehene Wanddurchbruch zur Aufnahme für die Einbauhülse im Durchmesser größer ausgebildet ist als die Einbauhülse. Demzufolge ergibt sich zwischen der Einbauhülse und dem Rand des Wanddurchbruches beim Einbau der Einbauhülse in die Wandung ein ringspaltförmiger Zwischenraum, der ein seitliches Verschieben der Einbauhülse in radialer Richtung und damit ein Ausrichten der Einbauhülse gegenüber dem Steckerteil ermöglicht. Der Zwischenraum wird über eine Toleranzrechnung bestimmt.

Vorzugsweise ist die Verrastung der ersten Raststellung zwischen der Spannhülse und der Einbauhülse durch Verschrauben der Sicherungsschraubhülse mit der Einbauhülse lösbar. Der Schraubabschnitt der Sicherungsschraubhülse überträgt beim Verschrauben der Sicherungsschraubhülse mit der Einbauhülse dabei genügend Kraft auf die Rastmittel der Spannhülse und/oder auf die Gegenrastmittel der Einbauhülse, um die Verrastung zu lösen. Das Lösen der Verrastung erfolgt ohne weitere Maßnahmen und ohne Beschädigung der Rastmittel bzw. Gegenrastmittel, so dass eine spätere Verrastung der Spann- und der Einbauhülse in der ersten Raststellung möglich bleibt.

Bei einer weiteren Ausführungsform der erfindungsgemäßen Wanddurchführung ist eine zweite Raststellung zwischen der Spannhülse und der Einbauhülse vorgesehen, die dem Widerlager näher liegt als die erste Raststellung, wobei in der zweiten Raststellung die Spannhülse an der Einbauhülse nach dem Lösen der Sicherungsschraubhülse von der Wanddurchführung unverrückbar dichtend axial festgelegt ist. In diesem Fall ist die zweite Raststellung vorzugsweise nicht oder nur Werkzeug lösbar ausgebildet.

Vorteile der Erfindung sind, dass die abdichtende Wanddurchführung auch ohne Gegenstecker bereits im vormontiertem radial verschiebbaren Zustand dicht ist. Außerdem ist die Montage besonders einfach, insbesondere werkzeugfrei möglich. Die abdichtende Wanddurchführung ist für unterschiedliche Stärken von Wandungen direkt einsetzbar oder einfach anpassbar.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: eine erfindungsgemäße abdichtende Wanddurchführung mit einer flanschförmigen Einbauhülse und einer rohrförmigen Spannhülse, zusammengesteckt (Fig. 1a) und auseinandergezogen (Fig. 1b);
- Figur 2: die Anordnung der Wanddurchführung aus Figur 1, an einer Wandung eines Gehäuses;
- Figur 3: die Einbauhülse aus Figur 1 vergrößert in perspektivischer Ansicht (Fig. 3a) und in Draufsicht (Fig. 3b);
- Figur 4: die Spannhülse aus Figur 1 vergrößert in perspektivischer Darstellung mit Blick von oben (Fig. 4a) und von unten (Fig. 4b);
- Figur 5: die Wanddurchführung aus Figur 2, montiert an der Wandung, mit eingeführtem Steckerteil, verschiebbar vorfixiert (Fig. 5a) und unverrückbar festgelegt (Fig. 5b) in Längsschnittdarstellung; und
- Figur 6: die Wanddurchführung aus Figur 1 festgelegt an der Wandung mit eingeführtem Steckabschnitt des Steckerteils in Seitenansicht.

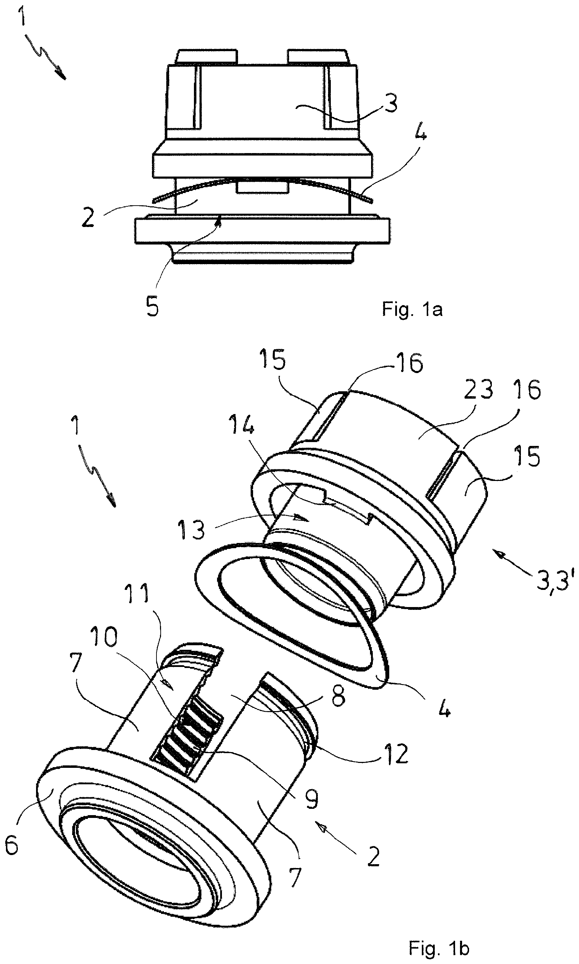

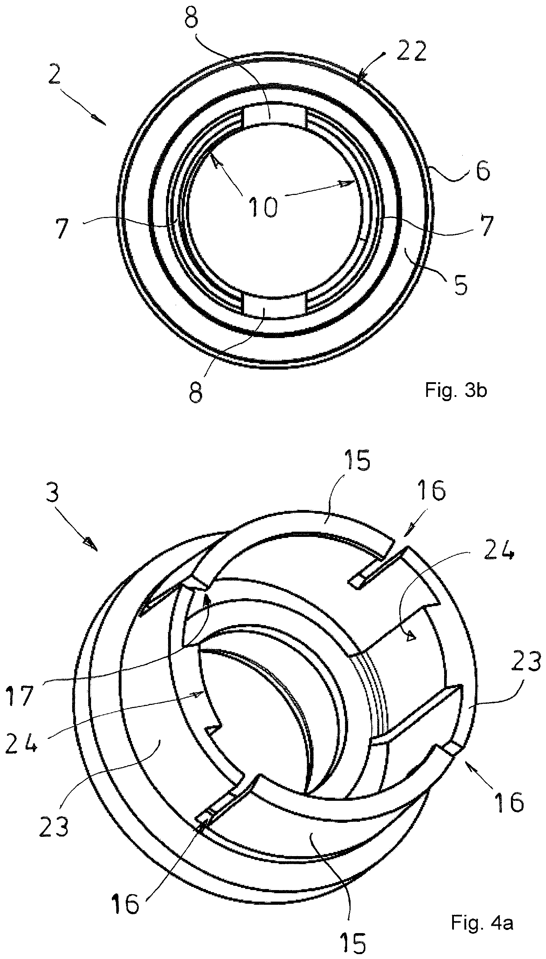

Die Figur 1a zeigt ein Ausführungsbeispiel einer erfindungsgemäßen abdichtenden Wanddurchführung 1, die eine flanschförmige Einbauhülse 2, eine rohrförmige Spannhülse 3 als Spannelement 3', einen Federspannring 4 und eine elastische ringförmige Dichtung 5 umfasst. Die Figur 1a zeigt die Wanddurchführung 1 zusammengesteckt in Seitenansicht, die Figur 1b die Wanddurchführung 1 auseinandergezogen in perspektivischer Darstellung. Die in der Figur 1a sichtbare Dichtung 5 ist in der Figur 1b durch das mit der Einbauhülse 2 verbundene außen umlaufende Widerlager 6 verdeckt. Die Einbauhülse 2 weist zwei sich in axialer Richtung erstreckende Hülsensegmente 7 auf, die von zwei Segmentzwischenräumen 8 getrennt sind. An einer Innenwand 9 der Einbauhülse 2 weisen die Hülsensegmente 7 ein Innengewinde 10 und an einer Außenwand 11 Gegenrastmittel 12 für die Spannhülse 3 auf, die als umlaufende Ringnut ausgebildet sind. Die Spannhülse 3 weist eine angeformte Führungshülse 13 auf, die über Querstege 14 mit der Spannhülse 3 verbunden ist. Die Spannhülse 3 ist an einem der Führungshülse 13 fernen Ende in Umfangsrichtung segmentiert ausgebildet. Sie weist zwei Federschenkel 15 auf, die durch zwei Längsschlitze 16 von der Spannhülse 3 getrennt sind. An einem freien Ende der Federschenkel 15 sind in der Figur 4a sichtbare nach innen vorstehende Rastmittel 17 ausgebildet, die mit den außen an der Einbauhülse 2 ausgebildeten Gegenrastmitteln 12 zusammenwirken.

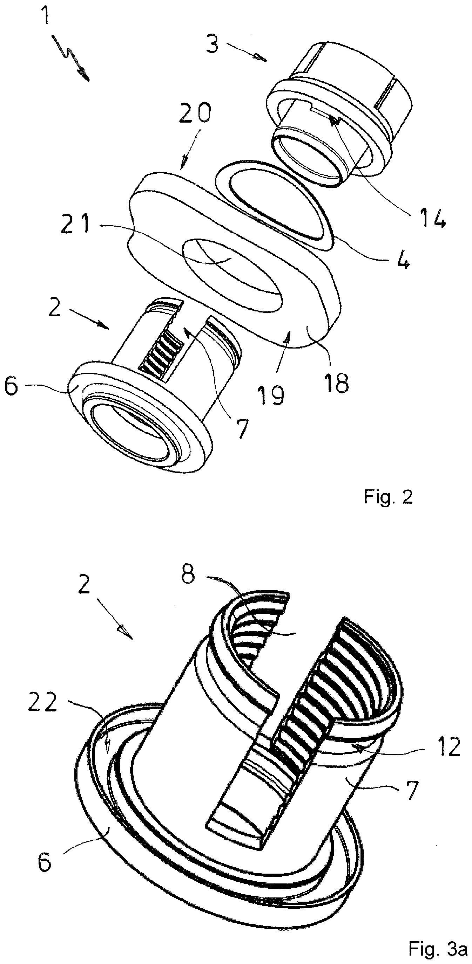

Die Figur 2 zeigt die Anordnungsweise der Wanddurchführung 1 aus Figur 1 an einer Wandung 18 eines in der Zeichnung nicht dargestellten Gehäuses. Die Wandung 18 weist eine Innenseite 19 und eine Außenseite 20 auf. Die Innenseite 19 der Wandung 18 ist dem Innenraum eines nicht dargestellten Gerätes zugeordnet. Die Außenseite 20 der Wandung 18 ist auf der dem Innenraum des Gehäuses abgewandten Seite angeordnet. Die Wandung 18 weist einen Wanddurchbruch 21 zur Aufnahme der Einbauhülse 2 auf. Der Wanddurchbruch 21 ist entsprechend der zylindrischen Einbauhülse 2 kreisförmig rund ausgebildet. Zur Montage der Wanddurchführung 1 an der Wandung 18 wird die Einbauhülse 2 von der Innenseite 19 der Wandung her in den Wanddurchbruch 21 mit auf dem umlaufenden Widerlager 6 angeordneter Dichtung 5 eingeführt, bis die Dichtung 5 an der Innenseite 19 anliegt. Von der Außenseite 20 her wird dann der Federspannring 4 auf die Einbauhülse 2 aufgefädelt und anschließend die Spannhülse 3 mit der Einbauhülse 2, die Einbauhülse 2 außen übergreifend, zusammengeführt. Dabei ist die Spannhülse 3 in Umfangsrichtung derart ausgerichtet, dass die Querstege 14 der Spannhülse 3 mit den Segmentzwischenräumen 8 der Einbauhülse 2 fluchten.

Die Figur 3 zeigt die Einbauhülse aus Figur 1 vergrößert in perspektivischer Ansicht (Figur 3a) und in Draufsicht (Figur 3b). Der Figur 3a ist zu entnehmen, dass die Hülsensegmentzwischenräume 8 sich bis nahe zu dem Widerlager 6 erstrecken. Die Einbauhülse 2 ist in dieser Figur ohne die Dichtung 5 dargestellt. Für die überstehende Aufnahme der Dichtung 5 weist das um die Einbauhülse 2 umlaufende Widerlager 6 eine an die Dichtung 5 angepasste ringförmige Vertiefung 22 auf, die in der Figur 3a jetzt sichtbar ist. An dem dem Widerlager 6 fernen Ende der Einbauhülse 2 sind die an den Hülsensegmenten 7 angeordneten Gegenrastmittel 12 für die Rastmittel 17 der Spannhülse 3 sichtbar. Die Gegenrastmittel 12 sind als Ringnut ausgebildet, die sich in Umfangsrichtung der Einbauhülse 2 erstreckt. Die Figur 3b zeigt die Einbauhülse 2 mit ihren Hülsensegmenten 7 und Segmentzwischenräumen 8 nochmals von oben mit Blick auf das Widerlager 6 und mit in der Vertiefung 22 einliegender Dichtung 5..

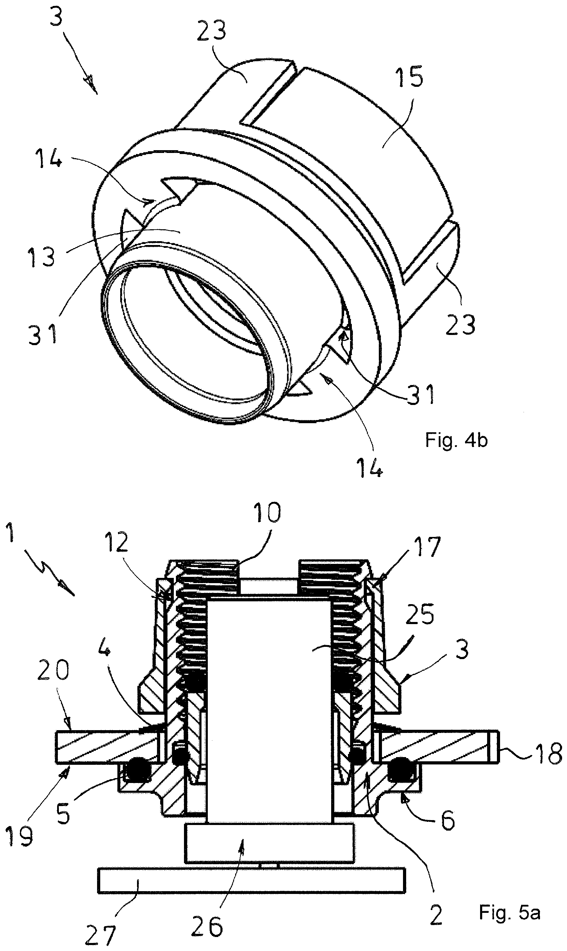

In der Figur 4 ist die Spannhülse 3 vergrößert in perspektivischer Darstellung abgebildet. Die Figur 4a zeigt deutlich die Federschenkel 15, an deren freiem Ende die Rastmittel 17 angeordnet sind, die korrespondierend zu den Gegenrastmitteln 12 der Einbauhülse 2 ausgebildet sind. Die Längsschlitze 16 trennen die Federschenkel 15 von Festschenkeln 23 der Spannhülse 3. Die beiden Festschenkel 23 weisen innen sich in axialer Richtung erstreckende erhabene Führungsstege 24 auf, die mit den Querstegen 14 verbunden sind, die die Führungshülse 13 halten. Die Figur 4b zeigt die Spannhülse 3 von unten. Die Querstege 14 und die Führungshülse 13 sind hier besser zu erkennen als in Figur 4a. Außerdem ist in dieser Figur der Ringraum 31 zwischen der Spannhülse 3 und der Führungshülse 13 sichtbar, der die Hülsensegmente 7 der Einbauhülse 2 bei der Montage aufnimmt.

Die Figur 5a veranschaulicht die Wanddurchführung 1 mit eingeführtem Steckabschnitt 25 des Steckerteils 26, montiert an der Wandung 18 ohne aufgesetztes Gegensteckerteil in einer Schnittdarstellung. Das Steckerteil 26 ist auf einer Schaltungsleiterplatte 27 angeordnet. Das Widerlager 6 mit dem Dichtring 5 ist in Anlage an der Wandung 18, wobei die Einbauhülse 2 von der Außenseite 20 der Wandung 18 absteht. Die Einbauhülse 2 trägt die Spannhülse 3 in einer ersten Raststellung, in der die Rastmittel 17 der Spannhülse 3 mit den Gegenrastmitteln 12 der Einbauhülse 2 in Eingriff sind. Zwischen der Wandung 18 und der Spannhülse 3 ist der Federspannring 4 angeordnet. Die Spannhülse 3 spannt den Federspannring 4 vor, der wiederum das Widerlager 6 an der Innenseite 19 der Wandung 18 dichtend in Anlage hält. Die Gegenrastmittel 12 und die Rastmittel 17 sind dabei derart ausgebildet, dass die Spannhülse 3 axial in Richtung des Widerlagers 6 der Einbauhülse 2 verschiebbar ist, bis die Spannhülse 3 an der Außenseite 20 der Wandung 18 anliegt.

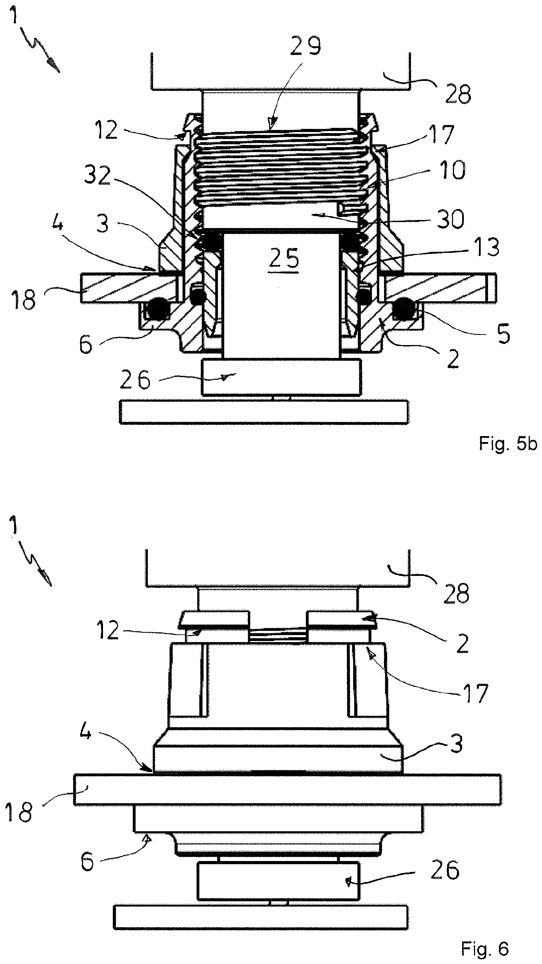

Die Figur 5b zeigt die Wanddurchführung 1 von Figur 5a mit auf das Steckerteil 26 aufgesetztem Gegensteckerteil und verschraubter Sicherungsschraubhülse 28 des Gegensteckerteils. Die Spannhülse 3 wird beim Verschrauben der Sicherungsschraubhülse 28 des Gegensteckerteils mit der Einbauhülse 2 in Richtung des Widerlagers 6 bewegt. Dazu weist die Sicherungsschraubhülse 28 vorne außen ein Außengewinde 29 auf, das mit dem Innengewinde 10 der Einbauhülse 2 zusammenwirkt. Der Schraubabschnitt 30 der Sicherungsschraubhülse 28, der das Außengewinde 29 trägt, drückt in dem gezeigten Ausführungsbeispiel über einen Dichtring 32 auf die Querstege 14 und die Führungshülse 13 stirnseitig, um das Widerlager 6 und die Spannhülse 3 aufeinander zu zu bewegen. Der Federspannring 4 ist von der Spannhülse 3 plan gedrückt.

Die Figur 6 zeigt die Wanddurchführung festgelegt an der Wandung 18 mit in die Einbauhülse 2 eingeführtem Steckabschnitt 25 des Steckerteils 26 nochmals in Seitenansicht. Das Widerlager 6 mit der Dichtung 5 ist dichtend gegen die Wandung 18 gepresst. Dazu drückt die aufgesetzte, mit der Einbauhülse 2 verschraubte Sicherungsschraubhülse 28 die Spannhülse 3 stirnseitig gegen die Wandung 18. Deutlich zu sehen ist, dass die Spannhülse 3 zu der Einbauhülse 2 gegenüber der ersten Raststellung in der gezeigten unverrückbaren Stellung in Richtung des Widerlagers 6 verschoben ist. In der gezeigten Stellung stützen sich die Rastmittel 17 der Spannhülse 3, wie der Figur 5b entnehmbar, nicht mehr in axialer Richtung hinten an den Gegenrastmitteln 12 der Einbauhülse 2 stirnseitig ab.

## Patentansprüche

1. Abdichtende Wanddurchführung (1) für eine Wandung (18) eines elektrischen Gerätes, mit einer flanschförmigen Einbauhülse (2) zur Aufnahme eines elektrische Kontakte aufweisenden Steckerteils (26), mit dem ein Gegensteckerteil verbindbar ist, das eine mit der Einbauhülse (2) verschraubbare Sicherungsschraubhülse (28) als Abzugssicherung für das Gegensteckerteil aufweist, wobei die Einbauhülse (2) zur Aufnahme eines Steckabschnittes (25) des Steckerteils (26) ausgebildet ist und ein mit der Einbauhülse (2) verbundenes außen umlaufend abstehendes Widerlager (6) mit einer ringförmigen elastischen Dichtung (5) für die Wandung (18) aufweist, wobei das Widerlager (6) den vollständigen Durchtritt der Einbauhülse (2) durch einen Wanddurchbruch (21) der Wandung (8) verhindert, und mit einem die Einbauhülse (2) zumindest teilweise außen umgreifenden Spannelement (3'), mittels dem die Einbauhülse (2) in Richtung des Widerlagers (6) an der Wandung (18) Kraft beaufschlagbar ist, so dass das Widerlager (6) an der Wandung (18) in Anlage gehalten ist, und wobei das Spannelement (3') eine rohrförmige Spannhülse (3) ist, die mindestens ein innen vorstehendes Rastmittel (17) aufweist, das mit einem außen an der Einbauhülse (2) ausgebildeten Gegenrastmittel (12) zusammenwirkt, **dadurch gekennzeichnet,**
• **dass** die Einbauhülse (2) zur Aufnahme eines auf einer Schaltungsleiterplatte (27) angeordneten und mit dieser verlöteten Steckerteils (26) ausgebildet ist,
• **dass** die Einbauhülse (2) ein Innengewinde (10) für ein Außengewinde (29) der Sicherungsschraubhülse (28) aufweist,
• **dass** die Einbauhülse (2) sich in axialer Richtung erstreckende Hülsensegmente (7) aufweist, zwischen denen sich Segmentzwischenräume (8) erstrecken,
• **dass** die Spannhülse (3) innen sich radial erstreckende Querstege (14) aufweist, die sich durch die Segmentzwischenräume (8) hindurch erstrecken und innen über die Einbauhülse (2) vorstehen, und
• **dass** die Spannhülse (3) durch Verschrauben der Sicherungsschraubhülse (28) mit der Einbauhülse (2) in Richtung des Widerlagers (6) bewegbar ist, wobei die Sicherungsschraubhülse (28) auf die Querstege (14) der Spannhülse (3) drückt.

2. Abdichtende Wanddurchführung nach Anspruch 1, **dadurch gekennzeichnet, dass** das Innengewinde (10) der Einbauhülse (2) an einer Innenwand (9) der Hülsensegmente (7) und das Gegenrastmittel (12) der Einbauhülse (2) an einer Außenwand (11) der Hülsensegmente (7) angeordnet ist.

3. Abdichtende Wanddurchführung nach Anspruch 1 oder 2, **dadurch gekennzeichnet, dass** die Spannhülse (3) innen eine an die Querstege (14) angeformte zylindrische Führungshülse (13) für den Steckabschnitt (25) des Steckerteils (26) aufweist, die von den Querstegen (14) gehalten ist und einen Ringraum (31) zwischen der Spannhülse (3) und der Führungshülse (13) begrenzt.

4. Abdichtende Wanddurchführung nach einem der vorstehenden Ansprüche, **dadurch gekennzeichnet, dass** zwischen dem Widerlager (6) und der Spannhülse (3) ein Federspannring (4) angeordnet ist.

5. Abdichtende Wanddurchführung nach einem der vorstehenden Ansprüche, **dadurch gekennzeichnet, dass** eine erste Raststellung vorgesehen ist, bei der die Spannhülse (3) die Einbauhülse (2) derart an der Wandung (18) vorspannt, dass die elastische Dichtung (5) wirksam und die Einbauhülse (2) in radialer Richtung verrückbar ist, :wobei der in der Wandung vorgesehene Wanddurchbruch (21) zur Aufnahme für die Einbauhülse (2) im Durchmesser größer ausgebildet ist als die Einbauhülse (2).

6. Abdichtende Wanddurchführung nach Anspruch 5, **dadurch gekennzeichnet, dass** die Verrastung der ersten Raststellung durch Verschrauben der Sicherungsschraubhülse (28) mit der Einbauhülse (2) lösbar ist.

7. Abdichtende Wanddurchführung nach einem der vorstehenden Ansprüche, **dadurch gekennzeichnet, dass** die Einbauhülse (2) durch Verschrauben der Sicherungsschraubhülse (28) mit der Einbauhülse (2) an der Wandung (18) dichtend verspannbar ist.

8. Abdichtende Wanddurchführung nach einem der vorstehenden Ansprüche, **dadurch gekennzeichnet, dass** eine zweite Raststellung vorgesehen ist, die dem Widerlager (6) näher liegt als die erste Raststellung und bei der die Spannhülse (3) an der Einbauhülse (2) nach dem Lösen der Sicherungsschraubhülse (28) axial festgelegt bleibt.

9. Abdichtende Wanddurchführung nach einem der vorstehenden Ansprüche, **dadurch gekennzeichnet, dass** die Spannhülse (3) aus einem Kunststoffmaterial geformt ist.

## Claims

1. Sealing wall lead-through (1) for a wall (18) of an electrical device, having a flange-shaped installation sleeve (2) for receiving a plug part (26) which has electrical contacts and to which there can be connected a counter-plug part which has a securing screw sleeve (28), which can be screwed with the installation sleeve (2), as pull-off safeguard for the counter-plug part, wherein the installation sleeve (2) is designed to receive a plugging portion (25) of the plug part (26) and has an externally peripherally protruding abutment (6) which is connected to the installation sleeve (2) and which has an annular elastic seal (5) for the wall (18), wherein the abutment (6) prevents the installation sleeve (2) from passing completely through a wall aperture (21) of the wall (8), and having a clamping element (3') which at least partially externally encompasses the installation sleeve (2) and by means of which force can be applied to the installation sleeve (2) in the direction of the abutment (6) on the wall (18), with the result that the abutment (6) is held in contact with the wall (18), and wherein the clamping element (3') is a tubular clamping sleeve (3) which has at least one internally projecting latching means (17) which interacts with a counter-latching means (12) formed externally on the insertion sleeve (2), **characterized**
• **in that** the insertion sleeve (2) is designed for receiving a plug part (26) which is arranged on a circuit board (27) and soldered thereto,
• **in that** the installation sleeve (2) has an internal thread (10) for an external thread (29) of the securing screw sleeve (28),
• **in that** the installation sleeve (2) has sleeve segments (7) which extend in the axial direction and between which segment interspaces (8) extend,
• **in that** the clamping sleeve (3) has radially extending transverse webs (14) on the inside which extend through the segment interspaces (8) and project internally beyond the installation sleeve (2), and
• **in that** the clamping sleeve (3) is moveable by screwing the securing screw sleeve (28) with the installation sleeve (2) in the direction of the abutment (6), wherein the securing screw sleeve (28) presses onto the transverse webs (14) of the clamping sleeve (3).

2. Sealing wall lead-through according to Claims 1, **characterized in that** the internal thread (10) of the installation sleeve (2) is arranged on an inner wall (9) of the sleeve segments (7), and the counter-latching means (12) of the installation sleeve (2) is arranged on an outer wall (11) of the sleeve segments (7).

3. Sealing wall lead-through according to Claim 1 or 2, **characterized in that** the clamping sleeve (3) has on the inside a cylindrical guide sleeve (13), which is integrally formed on the transverse webs (14), for the plugging portion (25) of the plug part (26), which guide sleeve is held by the transverse webs (14) and delimits an annular space (31) between the clamping sleeve (3) and the guide sleeve (13).

4. Sealing wall lead-through according to one of the preceding claims, **characterized in that** a spring clamping ring (4) is arranged between the abutment (6) and the clamping sleeve (3).

5. Sealing wall lead-through according to one of the preceding claims, **characterized in that** a first latching position is provided in which the clamping sleeve (3) prestresses the installation sleeve (2) against the wall (18) in such a way that the elastic seal (5) is active and the installation sleeve (2) is moveable in the radial direction, wherein the wall aperture (21) provided in the wall and intended for receiving the installation sleeve (2) is designed to be larger in diameter than the installation sleeve (2).

6. Sealing wall lead-through according to Claim 5, **characterized in that** the latching of the first latching position can be released by screwing the securing screw sleeve (28) with the installation sleeve (2).

7. Sealing wall lead-through according to one of the preceding claims, **characterized in that** the installation sleeve (2) can be sealingly braced against the wall (18) by screwing the securing screw sleeve (28) with the installation sleeve (2).

8. Sealing wall lead-through according to one of the preceding claims, **characterized in that** a second latching position is provided which is situated closer to the abutment (6) than the first latching position and in which the clamping sleeve (3) remains axially fixed the installation sleeve (2) after releasing the securing screw sleeve (28).

9. Sealing wall lead-through according to one of the preceding claims, **characterized in that** the clamping sleeve (3) is formed from a plastic material.

## Revendications

1. Traversée de paroi étanche (1) pour une paroi (18) d'un appareil électrique, comprenant un manchon d'installation en forme de bride (2) pour recevoir une partie de connecteur (26) présentant des contacts électriques, à laquelle peut être raccordée une partie de connecteur conjuguée qui présente un manchon de vis de sécurité (28) pouvant être vissé avec le manchon d'installation (2) en tant que verrouillage de sécurité pour la partie de connecteur conjuguée, le manchon d'installation (2) étant prévu pour recevoir une portion d'enfichage (25) de la partie de connecteur (26) et présentant une butée (6) faisant saillie sur la périphérie extérieure, connectée audit manchon d'installation (2), avec un joint d'étanchéité élastique annulaire (5) pour la paroi (18), la butée (6) empêchant le passage complet du manchon d'installation (2) à travers un orifice de paroi (21) de la paroi (8), et comprenant un élément de serrage (3') venant en prise au moins en partie à l'extérieur autour du manchon d'installation (2), au moyen duquel le manchon d'installation (2) peut être sollicité avec une force dans la direction de la butée (6) contre la paroi (18) de telle sorte que la butée (6) soit maintenue en appui contre la paroi (18), et l'élément de serrage (3') étant un manchon de serrage tubulaire (3) qui présente au moins un moyen d'encliquetage saillant vers l'intérieur (17) qui coopère avec un moyen d'encliquetage conjugué (12) réalisé à l'extérieur au niveau du manchon d'installation (2),
**caractérisée en ce que**
- ledit manchon d'installation (2) est prévu pour recevoir une partie de connecteur (26) disposée sur une carte à circuits imprimés (27) et brasée sur celle-ci,
- ledit manchon d'installation (2) présente un filetage intérieur (10) pour un filetage extérieur (29) du manchon de vis de sécurité (28),
- le manchon d'installation (2) présente des segments de manchon (7) s'étendant dans la direction axiale, entre lesquels s'étendent des espaces intermédiaires de segments (8),
- le manchon de serrage (3) présente à l'intérieur des nervures transversales (14) s'étendant radialement qui s'étendent à travers les espaces intermédiaires de segments (8) et font saillie à l'intérieur au-delà du manchon d'installation (2), et
- le manchon de serrage (3) peut être déplacé par vissage du manchon de vis de sécurité (28) avec le manchon d'installation (2) dans la direction de la butée (6), le manchon de vis de sécurité (28) pressant contre les nervures transversales (14) du manchon de serrage (3).

2. Traversée de paroi étanche selon la revendication 1, **caractérisée en ce que** le filetage interne (10) dudit manchon d'installation (2) est disposé au niveau d'une paroi intérieure (9) des segments de manchon (7) et le moyen d'encliquetage conjugué (12) du manchon d'installation (2) est disposé au niveau d'une paroi extérieure (11) des segments de manchon (7).

3. Traversée de paroi étanche selon la revendication 1 ou 2, **caractérisée en ce que** le manchon de serrage (3) présente à l'intérieur un manchon de guidage cylindrique (13) formé au niveau des nervures transversales (14) pour la portion d'enfichage (25) de la partie de connecteur (26), qui est retenu par les nervures transversales (14) et limite un espace annulaire (31) entre le manchon de serrage (3) et le manchon de guidage (13).

4. Traversée de paroi étanche selon l'une quelconque des revendications précédentes, **caractérisée en ce qu'**entre la butée (6) et le manchon de serrage (3) est disposée une bague de serrage élastique (4).

5. Traversée de paroi étanche selon l'une quelconque des revendications précédentes, **caractérisée en ce qu'**une première position d'encliquetage est prévue dans laquelle le manchon de serrage (3) précontraint ledit manchon d'installation (2) contre la paroi (18) de telle sorte que le joint d'étanchéité élastique (5) soit efficace et que le manchon d'installation (2) puisse être déplacé dans la direction radiale, l'orifice de paroi (21) prévu dans la paroi, pour recevoir ledit manchon d'installation (2), ayant un diamètre supérieur à celui dudit manchon d'installation (2).

6. Traversée de paroi étanche selon la revendication 5, **caractérisée en ce que** l'encliquetage de la première position d'encliquetage peut être desserré par vissage du manchon de vis de sécurité (28) avec le manchon d'installation (2).

7. Traversée de paroi étanche selon l'une quelconque des revendications précédentes, **caractérisée en ce que** ledit manchon d'installation (2) peut être serré de manière étanche contre la paroi (18) par vissage du manchon de vis de sécurité (28) avec ledit manchon d'installation (2).

8. Traversée de paroi étanche selon l'une quelconque des revendications précédentes, **caractérisée en ce qu'**une deuxième position d'encliquetage est prévue, laquelle est située plus près de la butée (6) que la première position d'encliquetage et dans laquelle le manchon de serrage (3) reste fixé axialement le manchon d'installation (2) après le desserrage du manchon de vis de sécurité (28).

9. Traversée de paroi étanche selon l'une quelconque des revendications précédentes, **caractérisée en ce que** le manchon de serrage (3) est formé d'un matériau en plastique.
